**Europäisches Patentamt**

(19) **European Patent Office**

**Office européen des brevets**

(11) Numéro de publication : **0 082 765**
**B1**

(12) # FASCICULE DE BREVET EUROPÉEN

(45) Date de publication du fascicule du brevet :
11.02.87

(51) Int. Cl.⁴ : **G 06 F 13/36, G 06 F 13/18**

(21) Numéro de dépôt : **82402292.5**

(22) Date de dépôt : **14.12.82**

(54) **Dispositif de gestion d'une mémoire commune à plusieurs processeurs.**

(30) Priorité : **23.12.81 FR 8124156**

(43) Date de publication de la demande :
**29.06.83 Bulletin 83/26**

(45) Mention de la délivrance du brevet :
**11.02.87 Bulletin 87/07**

(84) Etats contractants désignés :
**DE GB IT**

(56) Documents cités :
**EP-A- 0 030 978**
**FR-A- 2 476 871**
**US-A- 4 077 011**
**US-A- 4 117 459**
**ELEKTRONIK, vol. 30, no. 1, janvier 1981, pages 81-85, München, DE. H.-W. BÜDENBENDER: "Bussystem wird dezentral gesteuert"**

(73) Titulaire : **COMPAGNIE EUROPEENNE DE TELE-TRANSMISSION C.E.T.T.**
**51, boulevard de la Republique**
**F-78400 Chatou (FR)**

(72) Inventeur : **Buob, Jean-Pierre**
**THOMSON-CSF SCPI 173, bld Haussmann**
**F-75379 Paris Cedex 08 (FR)**

(74) Mandataire : **Weinmiller, Jürgen et al**
**Lennéstrasse 9**
**D-8133 Feldafing (DE)**

## Description

L'invention concerne les systèmes informatiques comportant plusieurs processeurs ayant une mémoire commune. Un système informatique peut être constitué, par exemple, de plusieurs microprocesseurs ayant d'une part chacun une mémoire individuelle, et d'autre part une mémoire commune. Il existe dans l'art antérieur divers dispositifs permettant à deux microprocesseurs d'échanger des informations et d'utiliser une mémoire commune. Quand le système comporte un plus grand nombre de microprocesseurs, il est connu de donner à l'un d'entre eux un rôle privilégié de gestion de la mémoire commune. Ce procédé a pour inconvénients d'accaparer une partie du temps de fonctionnement et une partie du logiciel d'un des microprocesseurs du système, et les logiciels de chacun des microprocesseurs du système ne sont pas complètement indépendants.

Le document EP-A-30 978 décrit un dispositif de contrôle d'un bus commun à plusieurs dispositifs tels que des processeurs, mémoires ou entrées-sorties, comportant des moyens de commande générant un signal logique lorsque l'accès au bus commun est libre ; chaque dispositif ayant accès au bus est respectivement couplé à un dispositif de commande, le dispositif de commande étant relié en série et transmettant le signal d'autorisation jusqu'au dispositif le plus prioritaire parmi ceux ayant demandé à accéder au bus commun, ce dernier dispositif de commande bloquant la transmission du signal d'autorisation et autorisant le dispositif qui lui est couplé à accéder au bus.

Le document US-A-4 117 459 décrit un système permettant la limitation du temps d'occupation d'un bus, commun à un ensemble de dispositifs, à l'aide de circuits temporisateurs contenus dans chacun de ces dispositifs situés le long du bus, lesdits circuits étant déclenchés par un signal d'autorisation d'accès au bus.

Il est connu de réaliser un dispositif de gestion d'une mémoire commune à plusieurs processeurs en le constituant de moyens de commande, générant un signal logique E lorsque l'accès à la mémoire commune est libre, et de dispositifs de commandes couplés respectivement aux processeurs et reliés en série pour transmettre le signal E, dans l'ordre de priorité des processeurs ; un dispositif de commande bloquant la transmission du signal E, si le processeur associé a demandé à accéder à la mémoire, et autorisant ce processeur à exécuter cet accès. Un tel dispositif de commande est décrit dans la demande de brevet français FR-2 476 871. Pour minimiser le temps de propagation du signal E à travers la série des dispositifs de commande ceux-ci comportent un ensemble de dérivations constitués de nombreuses portes commandées par de nombreuses bascules synchrones. Ce dispositif est complexe, et l'utilisation de bascules synchrones entraîne un ralentissement de la propagation du signal E à cause des temps d'attente de la synchronisation.

Le dispositif selon l'invention permet de remédier à ces inconvénients par des moyens simples.

Selon l'invention un dispositif de gestion d'une mémoire commune à plusieurs processeurs comportant des moyens de commande générant un signal logique E lorsque l'accès à la mémoire commune est libre ; chaque processeur étant respectivement couplé à un dispositif de commande ; les dispositifs de commande étant reliés en série, dans l'ordre de priorité des processeurs y associés, et transmettant le signal E jusqu'au dispositif de commande le plus prioritaire parmi ceux ayant demandé à accéder à la mémoire commune, ce dernier dispositif de commande bloquant la transmission du signal E et autorisant le processeur qui lui est couplé, à accéder à la mémoire commune ; chaque dispositif de commande comportant des moyens asynchrones pour bloquer la transmission du signal E, les moyens asynchrones d'un dispositif de commande étant déclenchés par le signal E lorsqu'il parvient jusqu'à ce dispositif de commande si le processeur associé à ce dispositif de commande a demandé à accéder à la mémoire commune, les moyens asynchrones pour bloquer la transmission du signal E comportant :

une bascule commandée par l'arrivée du signal E, et validée par un signal de commande d'accès généré par le processeur associé, pour mémoriser une autorisation d'accès ;

des moyens d'acheminement de ce signal E avec un temps de transit plus long que celui de la bascule, caractérisé en ce que chaque dispositif de commande possède une sortie reliée à une première borne d'entrée des moyens de commande pour transmettre un signal DMC correspondant à une demande d'accès ; en ce que chaque dispositif de commande a une sortie transmettant un signal $Ei + 1$ reliée à une entrée du dispositif de commande de rang supérieur, le premier dispositif ayant une borne d'entrée reliée à une sortie des moyens de commande pour transmettre un signal E1 ; en ce que le dernier dispositif de commande de la série possède une borne de sortie reliée à une deuxième borne d'entrée des moyens de commande, pour leur retransmettre le signal $En + 1$ ; et en ce que la sortie des données et des adresses de chaque processeur est reliée à un bus d'adresses et de données d'accès à la mémoire commune par l'intermédiaire d'une porte commandée par une sortie du dispositif de commande correspondant qui transmet un signal de commande OBi ;

les moyens de commande fournissant sur leur borne de sortie (4) le signal E1 lorsque le signal DMC est appliqué sur leur première borne d'entrée (3) ou bien lorsque le signal $En + 1$, revient sur leur deuxième borne d'entrée (2).

L'invention sera mieux comprise et d'autres détails apparaîtront dans la description ci-dessous et les figures l'accompagnant.

La figure 1 représente le schéma synoptique d'un exemple de réalisation du dispositif selon l'invention.

La figure 2 et la figure 4 représentent des schémas synoptiques plus détaillés de deux parties du schéma de la figure 1.

La figure 6 représente le schéma synoptique d'un exemple de réalisation d'une variante du dispositif représenté par la figure 2.

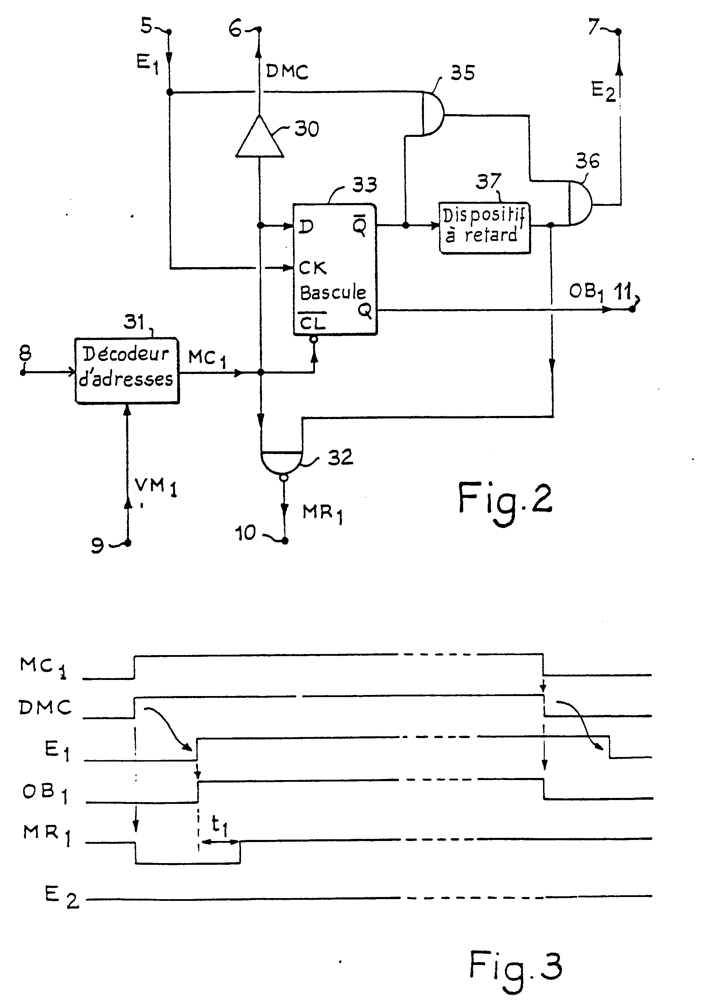

Les figures 3, 5, 7 et 8 représentent des chronogrammes décrivant le fonctionnement de l'exemple de réalisation du dispositif selon l'invention.

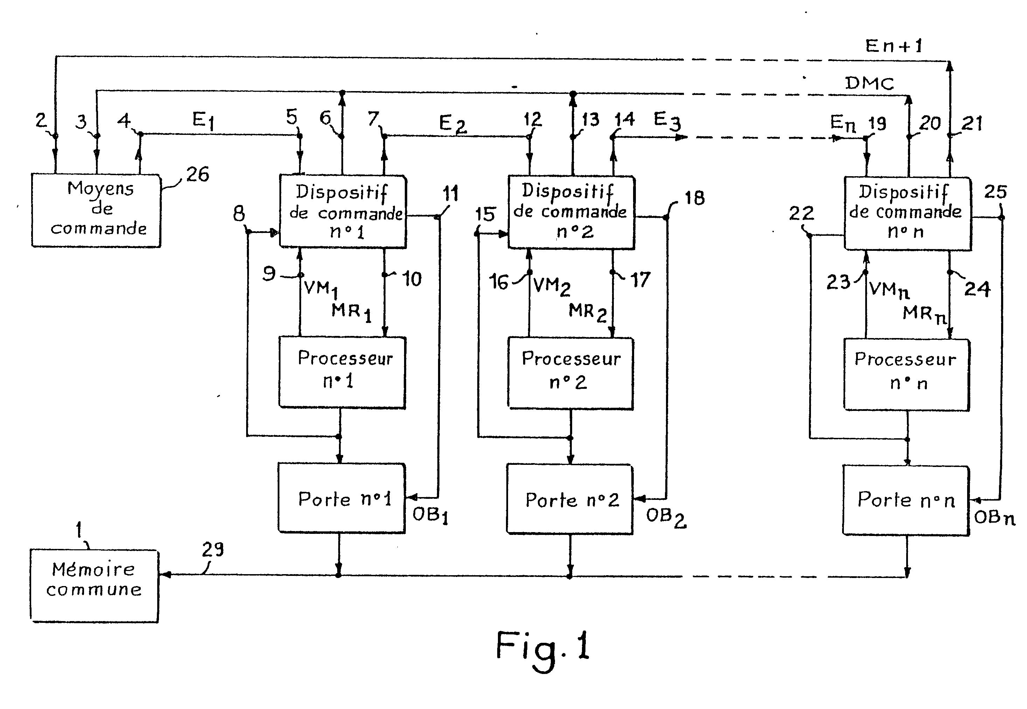

La figure 1 représente le schéma synoptique d'un exemple de réalisation du dispositif selon l'invention incorporé à un système informatique comportant n processeurs (n entier supérieur à 1). Chaque processeur est désigné par un numéro qui est une fonction décroissante de sa priorité d'accès à la mémoire commune. Chaque processeur possède une mémoire individuelle, non représentée sur la figure 1, et est relié à une mémoire commune 1 par un bus d'adresses et de données 29, auquel il accède par l'intermédiaire d'une porte portant le même numéro que le processeur. Chaque processeur est relié d'autre part à un dispositif de commande portant ce même numéro. La sortie des adresses et des données du processeur n° 1 est reliée d'une part à l'entrée de la porte n° 1 et d'autre part à une borne d'entrée 8 du dispositif de commande n° 1. Le processeur n° 1 fournit un signal logique $VM_1$ à une borne d'entrée 9 du dispositif de commande n° 1, et celui-ci fournit par la borne de sortie 10 un signal logique $MR_1$ à une entrée du processeur n° 1, et par une borne de sortie 11 un signal logique $OB_1$ à une entrée de commande de la porte n° 1. Des moyens de commande 26 fournissent, par une borne de sortie 4, un signal logique $E_1$ à une borne d'entrée 5 du dispositif de commande n° 1, et celui-ci fournit, par une borne de sortie 7, un signal logique $E_2$ à une borne d'entrée 12 d'un dispositif de commande n° 2 associé au processeur n° 2. Le dispositif de commande n° 2 fournit, par une borne de sortie 14, un signal logique $E_3$ à une borne d'entrée du dispositif de commande n° 3 qui n'est pas représenté sur la figure 1. Le processeur n° 2 est relié au bus des données et des adresses 29 par l'intermédiaire d'une porte n° 2 commandée par un signal logique $OB_2$ fourni par le dispositif de commande n° 2 sur une borne de sortie 18. La sortie des données et des adresses du processeur n° 2 est reliée d'une part à une entrée de la porte n° 2 et, d'autre part, à une borne d'entrée 15 du dispositif de commande n° 2. Le dispositif de commande n° 2 reçoit, sur une borne d'entrée 16, un signal logique $VM_2$ fourni par une sortie du processeur n° 2, et fournit à ce processeur un signal logique $MR_2$ par une borne de sortie 17.

Les processeurs n° 3, ..., n — 1, leurs dispositifs de commande et les portes associées, ne sont pas représentés sur la figure 1, mais leur schéma peut être déduit aisément de la figure 1, où apparaît la structure modulaire du dispositif. Cette modularité constitue un avantage important car elle permet d'agrandir ou de restreindre facilement le système.

Un dispositif de commande n° n reçoit, sur une borne d'entrée 19, un signal logique $E_n$ fourni par un dispositif de commande n° n — 1 non représenté sur la figure 1, et fournit un signal logique $E_{n + 1}$, par une borne de sortie 21, à une borne d'entrée 2 des moyens de commande 26. La sortie des données et des adresses du processeur n° n est reliée au bus 29 par l'intermédiaire d'une porte n° n commandée par un signal logique $OB_n$ fourni par le dispositif de commande n° n sur une borne de sortie 25. La sortie des adresses et des données du processeur n° n est reliée d'autre part à une borne d'entrée 22 du dispositif de commande n° n. Le processeur n° n fournit un signal logique $VM_n$ à une borne d'entrée 23 du dispositif de commande n° n, et celui-ci fournit au processeur n° n un signal logique $MR_n$ par une borne de sortie 24. Les dispositifs de commande n° 1, 2, ..., n, sont reliés respectivement par des bornes de sortie 6, 13, ..., 20, à une ligne bus transmettant un signal logique DMC à une borne d'entrée 3 des moyens de commande 26.

Si le processeur n° 2, par exemple, veut accéder à la mémoire commune 1 il génère une adresse sur sa sortie des adresses et des données et un signal logique $VM_2$ validant cette adresse. Le dispositif de commande n° 2, recevant cette adresse et ce signal logique, génère un signal logique DMC informant les moyens de commande 26 qu'un processeur demande à accéder à la mémoire commune 1. Les moyens de commande 26 génèrent le signal logique $E_1$ qui est retransmis par le dispositif de commande n° 1 sous la forme du signal logique $E_2$ qui est appliqué au dispositif de commande n° 2. Le signal logique $E_2$ autorisant l'accès à la mémoire commune, le dispositif de commande n° 2 fournit le signal $OB_2$ pour ouvrir la porte n° 2 et ensuite le signal $MR_2$ informant le processeur n° 2 qu'il peut accéder à la mémoire commune. Quand cet accès est terminé le signal logique DMC fourni par le dispositif de commande n° 2 disparaît, d'autres dispositifs de commande peuvent demander l'accès à la mémoire commune, en générant un signal DMC.

En règle générale le signal logique $E_1$ passe à la valeur 1 quand les moyens de commande 26 reçoivent un signal DMC de demande d'accès. Ce passage à la valeur 1 constitue une autorisation d'accès et est retransmis successivement par tous les dispositifs de commande jusqu'à un dispositif de commande associé à un processeur ayant fait une demande d'accès, et ne se propage pas au-delà. S'il y a plusieurs demandes d'accès simultanées, c'est le processeur de numéro le plus faible qui est donc satisfait en priorité. Dans l'exemple précédant le signal $E_1$ fourni par les moyens de commande 26 au dispositif de commande n° 1, est transmis par celui-ci sous la forme du signal $E_2$, parce que le processeur n° 1 n'a pas demandé d'accès à la mémoire. Le signal $E_2$ n'est pas retransmis par le dispositif de commande n° 2 parce que, dans cet exemple, le processeur n° 2 a fait une demande d'accès à la mémoire.

Si un autre processeur fait une demande d'accès à la mémoire commune 1 pendant qu'elle est utilisée par le processeur n° 2, il attend que le processeur n° 2 ait terminé d'utiliser la mémoire commune. Quand le processeur n° 2 a fini d'utiliser la mémoire commune 1, les signaux DMC et $E_1$ restent à la valeur 1. Le processeur n° 2 ne génère plus le signal $VM_2$ appliqué à l'entrée 16 du dispositif de commande n° 2, celui-ci transmet alors le signal $E_2$, sous la forme du signal $E_3$, à une entrée du dispositif de commande n° 3. Deux cas sont alors à distinguer, selon que l'autre processeur demandeur est en amont ou en aval du processeur libérant la mémoire commune, c'est-à-dire selon que l'autre processeur a un numéro inférieur ou supérieur à 2, dans cet exemple.

Dans le cas où l'autre processeur demandeur est en aval, tel le processeur n° 4 dans cet exemple, la valeur 1 du signal $E_1$ se propage jusqu'au dispositif de commande n° 4 sous la forme du passage à la valeur 1 du signal $E_4$. Ce passage à 1 constitue l'autorisation d'accès à la mémoire commune 1. Le dispositif de commande n° 4 bloque la propagation de ce signal, le signal $E_5$ reste à la valeur 0. Le processeur n° 4 est connecté au bus 29 et accède à la mémoire 1.

Dans ce cas où l'autre processeur demandeur est en amont, tel le processeur n° 1 dans cet exemple, la valeur 1 du signal $E_1$ est transmise sous la forme des signaux $E_2$, $E_3$, ..., $E_n$, $E_{n+1}$ et revient aux moyens de commande 26 par leur borne d'entrée 2. Les moyens de commande 26 font alors passer le signal $E_1$ momentanément à la valeur 0. Le dispositif de commande n° 1, qui avait retransmis précédemment le signal $E_1$ parce que le processeur n° 1 ne demandait pas l'accès, est maintenant sensible au passage du signal $E_1$ de la valeur 0 à la valeur 1. Il bloque la propagation du signal $E_1$, le signal $E_2$ reste à la valeur 0. Le processeur n° 1 est relié au bus 29 et accède à la mémoire commune 1.

La figure 2 représente le schéma synoptique d'un exemple de réalisation d'un des dispositifs de commande, par exemple le dispositif de commande n° 1. La borne d'entrée 8 fournit une adresse à une entrée d'un décodeur d'adresses 31, et la borne d'entrée 9 fournit le signal de validation $VM_1$ à une entrée de validation de ce décodeur d'adresses 31. La sortie du décodeur d'adresses 31 fournit un signal logique $MC_1$ lorsque l'adresse reçue est une des adresses de la mémoire commune, le signal $MC_1$ est fourni à l'entrée d'un amplificateur tampon 30, à une entrée D et à une entrée de remise à zéro $\overline{CL}$ d'une bascule 33, et à une première entrée d'une porte NON ET 32. La sortie de l'amplificateur tampon 30 est reliée, par une borne de sortie 6, à la ligne bus transmettant le signal DMC et qui réalise une fonction logique OU.

Les moyens de commande 26 fournissent à la borne d'entrée 5 du dispositif de commande n° 1

un signal $E_1$ qui est appliqué à une entrée d'horloge CK de la bascule 33 et à une première entrée d'une porte ET 35. Un front montant du signal $E_1$ provoque la mémorisation de la valeur 1 du signal $MC_1$ par la bascule 33, une sortie Q de cette bascule 33 passe au niveau 1 et ce signal logique constitue le signal $OB_1$ qui est fourni à la borne de sortie 11 du dispositif de commande n° 1. La bascule 33 possède une sortie $\overline{Q}$ fournissant une valeur complémentaire de celle présente sur la sortie Q. Cette valeur complémentaire est fournie d'une part à une deuxième entrée de la porte ET 35, et d'autre part à une entrée d'un dispositif à retard 37. La sortie du dispositif à retard 37 est reliée d'une part à une première entrée d'une porte ET 36, et d'autre part à une deuxième entrée de la porte NON ET 32. La sortie de la porte NON ET 32 fournit le signal $MR_1$ à la borne de sortie 10. La deuxième entrée de la porte ET 36 est reliée à la sortie de la porte ET 35. La sortie de la porte ET 36 fournit le signal $E_2$ à la borne de sortie 7.

Quand l'accès à la mémoire commune 1 est accordé, cette autorisation est mémorisée par la bascule 33, le signal $OB_1$ ouvre la porte n° 1 d'accès au bus d'adresses et de données 29, et la sortie de la porte NON ET 32 fournit un signal $MR_1$ de valeur 1 indiquant au processeur n° 1 qu'il peut accéder à la mémoire commune 1. La sortie $\overline{Q}$ de la bascule 33 fournit un signal de valeur 0 qui bloque la porte ET 35 pour empêcher la propagation du signal $E_1$, d'autorisation d'accès à la mémoire commune 1, vers la borne de sortie 7. Le dispositif à retard 37 fournit un signal de valeur 0 avec un retard $t_1$. Tant que la valeur 0 n'est pas fournie par le dispositif à retard 37 la porte NON ET 32 reçoit sur sa première et sur sa deuxième entrée des valeurs 1, par conséquent la sortie de cette porte fournit un signal de valeur 0 qui fait attendre le processeur n° 1 pendant le temps nécessaire à l'ouverture de la porte n° 1.

La figure 3, représente le chronogramme de ces signaux logiques quand le processeur n° 1 est seul à demander l'accès à la mémoire commune 1. Le signal $MC_1$ de décodage d'une adresse de la mémoire commune provoque l'envoi du signal DMC de demande d'accès à la mémoire commune. Les moyens de commande 2 autorisent l'accès à la mémoire commune après un certain temps en fournissant le signal $E_1$ de valeur 1, celui-ci provoque le basculement de la bascule 33 qui fournit le signal $OB_1$ de valeur 1. D'autre part la valeur 1 du signal $MC_1$ provoque le passage à la valeur 0 du signal $MR_1$, qui met en position d'attente le processeur n° 1. Le passage au niveau 1 du signal $OB_1$ permet l'accès du processeur n° 1 vers le bus des adresses et des données 29 de la mémoire commune 1. Le signal complémentaire de $OB_1$, retardé par le dispositif à retard 37 d'un temps $t_1$, provoque la remontée au niveau 1 du signal $MR_1$, ce qui autorise le processeur n° 1 à continuer son travail qui est en l'occurrence un accès à la mémoire commune. Le signal $E_1$ ne peut pas se propager sous la forme

du signal $E_2$ parce que la porte 35 est bloquée par le signal de valeur 0 fourni par la sortie $\bar{Q}$ sitôt que la bascule 33 a basculé sous l'action du front montant de $E_1$. Pour que ce blocage soit effectif il est nécessaire que la bascule 33 soit réalisée avec une technologie plus rapide que la porte ET 35. Quand le processeur n° 1 a terminé son accès à la mémoire commune le décodeur d'adresses 31 ne détecte plus sur son entrée la présence d'une adresse de la mémoire commune, le signal $MC_1$ reprend la valeur 0, le signal DMC de demande d'accès à la mémoire commune reprend aussi la valeur 0 et l'entrée $\overline{CL}$ de la bascule 33 est activée. Les sorties Q et $\bar{Q}$ de la bascule 33 prennent respectivement les valeurs 0 et 1, le signal $OB_1$ reprend la valeur 0, donc la porte n° 1 est bloquée. Le signal $MR_1$ est inchangé, il reste au niveau 1, le processeur n° 1 peut donc continuer son travail. Le passage à la valeur 1 du signal fourni par la sortie $\bar{Q}$ de la bascule 33 débloque la porte ET 35 puis débloque avec un retard $t_1$ la porte ET 36. Ces deux portes étant connectées en série, elles ne peuvent acheminer un éventuel signal logique $E_1$ qu'après le déblocage de la porte 36, c'est-à-dire avec un retard supérieur à $t_1$ après le retour à zéro du signal $MC_1$. Comme il est représenté sur la figure 3, la disparition de la demande d'accès à la mémoire commune provoque avec un certain retard la disparition du signal $E_1$ d'autorisation d'accès, envoyé par les moyens de commande 26.

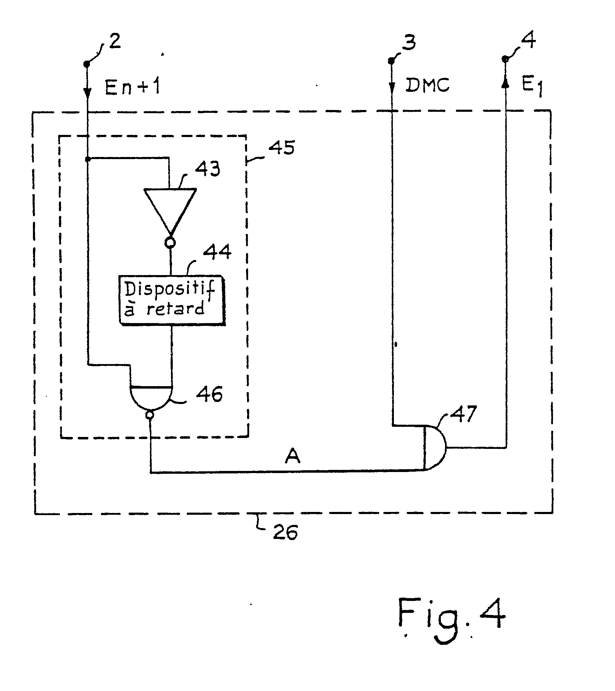

La figure 4 représente le schéma synoptique d'un exemple de réalisation des moyens de commande 26. La borne d'entrée 3 est reliée à une première entrée d'une porte ET 47 dont une deuxième entrée est reliée à une sortie d'un dispositif générateur d'impulsions 45. La borne d'entrée 2, recevant le signal logique $E_{n+1}$ est reliée à l'entrée de ce générateur d'impulsions 45. La sortie de la porte ET 47 constitue la sortie des moyens de commande 26 et fournit le signal $E_1$ à la borne de sortie 4. Au repos la sortie du générateur d'impulsions 45 fournit un signal logique A de valeur 1. Le dispositif générateur d'impulsions 45 comporte une porte NON ET 46 dont une première entrée est reliée à l'entrée du dispositif générateur d'impulsions 45 et dont une deuxième entrée est reliée à la sortie d'un dispositif à retard 44. L'entrée d'un inverseur logique 43 est reliée à l'entrée du générateur d'impulsions 45 et sa sortie est reliée à l'entrée du dispositif à retard 44. La sortie de la porte NON ET 46 constitue la sortie du générateur d'impulsions 45. Quand un signal $E_{n+1}$, constitué d'un passage de la valeur 0 à la valeur 1, est appliqué à la borne d'entrée 2, les deux entrées de la porte NON ET 46 sont momentanément au niveau logique 1. L'inverseur 43 inverse le signal $E_{n+1}$. Le dispositif à retard 44 fournit, avec un retard déterminé, un niveau logique 0 à la deuxième entrée de la porte ET 46. La sortie de cette porte ET 46 passe donc momentanément au niveau logique 0, pendant une durée égale au retard procuré par le dispositif à retard 44.

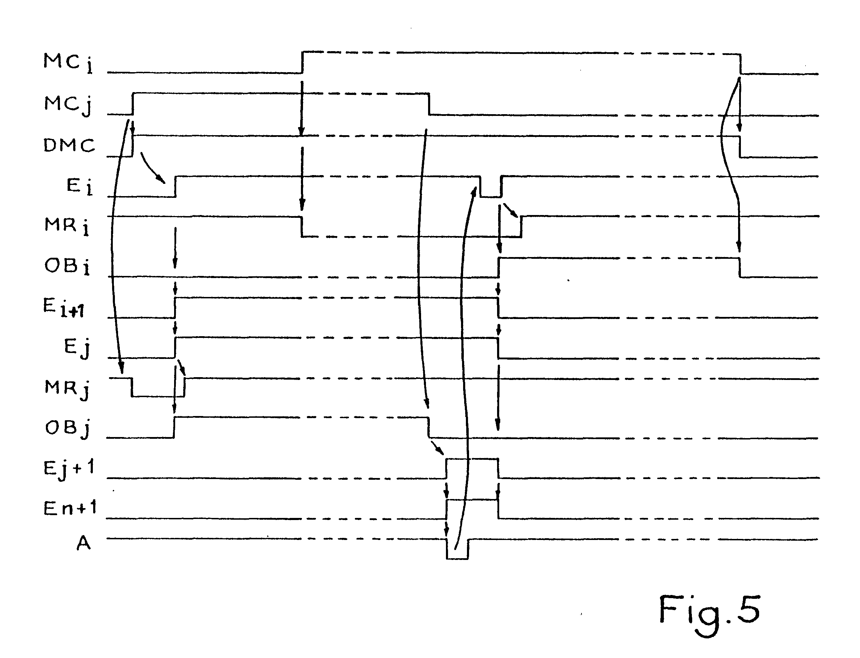

La figure 5 représente des chronogrammes des signaux logiques circulant dans les dispositifs de commande n° i et n° j lorsque successivement les processeurs n° i et n° j font une demande d'accès à la mémoire commune. La valeur de i est inférieure à la valeur de j, c'est-à-dire que le processeur n° i est en amont par rapport au processeur n° j, mais il fait une demande d'accès qui est postérieure à la demande du processeur n° j. Quand le processeur n° j demande à accéder à la mémoire commune le signal $MC_j$ prend la valeur 1, et provoque le passage à la valeur 1 du signal DMC envoyé aux moyens de commande 26, et le passage à 0 du signal $MR_j$ pour commander au processeur j d'attendre l'autorisation d'accès. La sortie du générateur d'impulsions 45 étant au niveau 1 au repos, le signal DMC provoque le passage au niveau 1 de la sortie de la porte ET 47. La valeur 1 du signal $E_1$ se propage à travers les dispositifs de commande n° 1, ..., i, ..., j — 1. Dans un premier temps le dispositif de commande n° i a seulement pour rôle de transmettre le signal d'autorisation d'accès $E_i$ sous la forme d'un signal $E_{i+1}$ qui arrive au dispositif de commande n° j sous la forme d'un signal $E_j$. Le signal $E_j$ provoque la génération d'un signal $OB_j$ d'ouverture de la porte n° j permettant au processeur n° j l'accès à la mémoire commune 1 par le bus d'adresses et de données 29. Pendant l'accès du processeur n° j à la mémoire commune 1, le processeur n° i fait une demande d'accès se traduisant par le passage au niveau 1 d'un signal $MC_i$ dans le dispositif de commande n° i, mais ce signal ne change pas la valeur du signal DMC qui reste égale à 1. Un signal $MR_i$ généré par le dispositif de commande n° i, passe au niveau 0 et met en attente le processeur n° i. Quand l'accès à la mémoire commune par le processeur n° j prend fin le signal $MC_j$ reprend la valeur 0, la bascule 33 du dispositif de commande n° j est remise à zéro, le signal $OB_j$ qu'elle fournit reprend la valeur 0. Le signal DMC restant au niveau 1 puisqu'il y a encore une demande d'accès en attente, les moyens de commande 26 fournissent donc encore un signal $E_1$ de niveau 1, ce signal est transmis par tous les dispositifs de commande de n° 1 à j — 1. Après la fermeture de la porte n° j par le passage au niveau 0 du signal $OB_j$ le dispositif à retard 37 fournit un signal débloquant la porte 36 du dispositif de commande n° j, le signal $E_j$ est donc transmis avec un retard $t_1$ sous la forme du passage au niveau 1 du signal $E_{j+1}$. Les processeurs de n° j + 1 à n n'ayant pas demandé l'accès à la mémoire commune, le signal $E_{j+1}$ se propage à travers ces dispositifs. Le dispositif de commande n° n fournit donc un signal $E_{n+1}$ de valeur 1, aux moyens de commande 26. Le dispositif générateur d'impulsions 45 fournit un signal A constitué d'une impulsion au niveau 0, qui, par l'intermédiaire de la porte ET 47, provoque un passage temporaire au niveau 0 des signaux $E_1$, $E_2$, ..., $E_i$. Le front montant du signal $E_i$ autorise le processeur n° i à accéder à la mémoire commune 1, il provoque le changement d'état des sorties de la bascule 33 du dispositif de commande n° i, le signal $OB_i$ passe

au niveau 1 et le signal $MR_i$ passe au niveau 1 après le retard défini par le dispositif à retard 37. La porte ET 35 est bloquée immédiatement, ce qui provoque le passage à 0 des signaux $E_{i+1}$, ..., $E_{j+1}$, $E_{n+1}$. Quand le processeur n° i a terminé son accès à la mémoire commune le décodeur d'adresses 31 du dispositif de commande n° i ne détecte plus la présence d'une adresse appartenant à la mémoire commune, le signal $MC_i$ repasse au niveau 0, ce qui entraîne le passage au niveau 0 du signal DMC et du signal $OB_i$ pour fermer la porte n° i.

Dans le cas où le processeur n° i accède à la mémoire commune et n'a pas terminé cet accès avant une demande d'accès par un processeur n° j situé en aval (j supérieur à i), le fonctionnement est tout à fait semblable à celui décrit précédemment. Le passage au niveau 0 du signal $MR_j$ donne au processeur n° j l'ordre d'attendre.

Deux difficultés particulières peuvent surgir pendant le fonctionnement du dispositif selon l'invention. Si le temps d'attente d'un processeur est long, l'exécution de ses tâches est ralentie ; un perfectionnement du dispositif selon l'invention permet de limiter la durée d'une attente en donnant l'ordre au processeur d'interrompre le traitement du programme en cours et de suivre un autre programme prédéterminé. D'autre part, si un des processeurs tombe en panne, l'ensemble du système peut être bloqué si le processeur défaillant occupe le bus 29 en permanence. Un autre perfectionnement du dispositif selon l'invention permet d'éviter ce blocage.

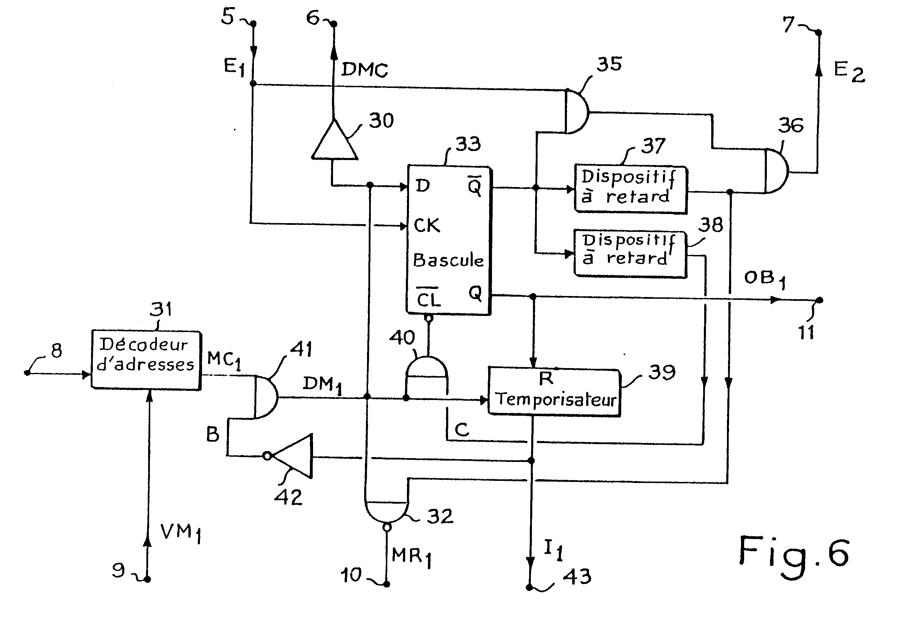

La figure 6, représente le schéma synoptique d'un exemple de réalisation d'un dispositif de commande, par exemple le dispositif de commande n° 1 de la figure 1, comportant les éléments de l'exemple de réalisation décrit précédemment et représenté sur la figure 2 et comportant en outre des éléments permettant de pallier aux deux difficultés mentionnées. Les moyens de limitation du temps d'attente du processeur sont constitués, dans cet exemple de réalisation, par une porte ET 41 intercalée sur la ligne transmettant le signal $MC_1$ fourni par le décodeur d'adresses 31. Une entrée de cette porte 41 reçoit un signal de commande B fourni par la sortie d'un inverseur logique 42 inversant un signal que lui fournit un temporisateur 39. La sortie de la porte ET 41 fournit un signal $DM_1$ de valeur 1 lorsque le signal $MC_1$ a la valeur 1 si la porte 41 n'est pas bloquée par le signal B. Le temporisateur 39 comporte une entrée recevant le signal $DM_1$, une entrée de remise à zéro R reliée à la sortie Q de la bascule 33, et une sortie reliée, d'une part à l'entrée de l'inverseur 42, et d'autre part à une borne de sortie 43 pour fournir un signal d'interruption $I_1$ à une entrée du processeur n° 1. La sortie de la porte ET 41 est reliée à l'entrée D de la bascule 33, à l'entrée de l'amplificateur tampon 30 et à la deuxième entrée de la porte NON ET 32, et est reliée à l'entrée $\overline{CL}$ de la bascule 33 par l'intermédiaire d'une porte ET 40 commandée par un signal logique C fourni par un deuxième dispositif à retard 38 dont l'entrée est connectée à

la sortie $\overline{Q}$ de la bascule 33. La porte 40 et le dispositif à retard 38 permettent de libérer le bus 29 en cas de défaillance du processeur n° 1. La porte 41, le temporisateur 39, et l'inverseur 42 permettent de limiter le temps d'attente du processeur n° 1 lorsque la mémoire commune est utilisée longuement par un des autres processeurs du système.

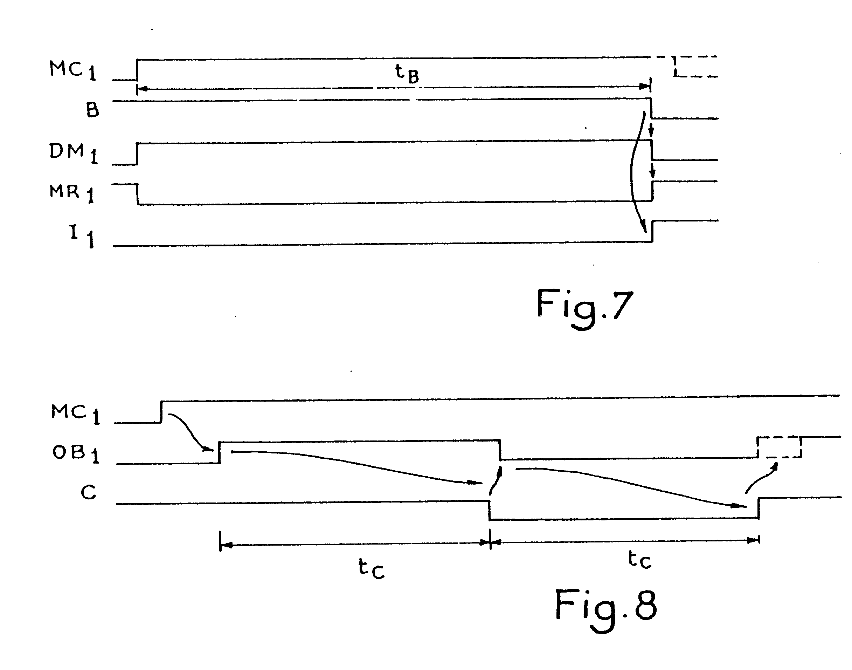

La figure 7 représente un chronogramme des signaux logiques intervenant pour limiter la durée d'attente du processeur n° 1. Quand le décodeur d'adresses 31 fournit un signal $MC_1$ de valeur 1, ce signal est transmis par la porte 41 vers l'entrée D de la bascule 33, l'entrée de l'amplificateur tampon 30, la deuxième entrée de la porte NON ET 32, vers une première entrée de la porte ET 40, et vers l'entrée du temporisateur 39 où elle déclenche une temporisation d'une durée $t_B$. Le signal B a pour valeur de repos 1 et prend la valeur 0 après le délai $t_B$. La porte ET 41 est alors bloquée, tout se passe comme si le processeur n° 1 ne cherchait plus à accéder à la mémoire commune, le signal $DM_1$ reprend la valeur 0, qui est transmise par la porte ET 40 à l'entrée $\overline{CL}$ de la bascule 33, le signal $OB_1$ reste donc à la valeur 0. Par ailleurs, la borne de sortie 43 fournit un signal $I_1$ de valeur 1 à une entrée du processeur n° 1, provoquant une interruption du programme suivi par ce processeur et le traitement d'un autre programme prédéterminé. Le signal $MR_1$ repasse à la valeur 1 pour autoriser le processeur n° 1 à travailler. Dans le cas le plus courant la durée d'une attente étant inférieure à la valeur $t_B$ du délai fixé, le retour au niveau 0 du signal $OB_1$ fourni par la sortie Q de la bascule 33 provoque une remise à zéro du temporisateur 39.

La figure 8 représente les chronogrammes des signaux logiques assurant le fonctionnement des moyens de limitation du temps de l'occupation du bus 29 par le processeur n° 1. Quand le processeur n° 1 a obtenu l'autorisation d'accès à la mémoire commune 1, le signal $OB_1$ prend la valeur 1 et la sortie $\overline{Q}$ de la bascule 33 passe au niveau 0. Cette valeur 0 est transmise avec un retard de valeur $t_c$ par le dispositif à retard 38 à une deuxième entrée de la porte ET 40. La porte 40 reçoit donc un signal C dont la valeur au repos est 1 et dont la valeur passe à 0 après un délai de valeur $t_c$. La bascule 33 est donc remise à zéro systématiquement quand un accès à la mémoire commune 1 par le processeur n° 1 dépasse une durée $t_c$.

Les signaux sont représentés pour le cas où le signal $MC_1$ est maintenu indéfiniment au niveau 1. Le front descendant du signal $OB_1$ provoque avec le retard $t_c$ une remontée du signal C au niveau 1, la bascule 33 est alors libre de changer d'état, si le signal $DM_1$ est toujours au niveau 1, dès qu'un signal $E_1$ arrive sur l'entrée d'horloge CK de la bascule 33. Les autres processeurs disposent donc d'intervalles de temps de durée au moins égale à $t_c$ pendant lesquels ils peuvent accéder au bus, chacun de ces intervalles étant séparé du suivant d'un délai de durée $t_c$ pendant lequel le bus 29 est occupé par le processeur n° 1. Ainsi le système peut continuer à fonctionner d'une façon dégradée mais quand même assez bonne si un processeur tombe en panne et demande en permanence un accès à la mémoire commune.

L'invention ne se limite pas aux exemples de réalisation décrits, il est notamment à la portée de l'homme de l'art de réaliser différemment le dispositif générateur d'impulsions 45, les moyens de limitation du temps d'attente et les moyens de limitation du temps d'occupation du bus. D'autre part, il est à la portée de l'homme de l'art de réaliser des moyens de commande 26 où le signal $E_1$ d'autorisation d'accès n'est pas déclenché par un signal DMC de demande d'accès, mais est envoyé périodiquement par un générateur de signal d'horloge. Dans ce cas un processeur qui fait une demande d'accès à la mémoire commune, attend pendant une durée qui peut atteindre la valeur d'une période d'horloge avant de recevoir un signal d'autorisation d'accès.

## Revendications

1. Dispositif de gestion d'une mémoire commune (1) à plusieurs processeurs comportant des moyens de commande (26) générant un signal logique E lorsque l'accès à la mémoire commune (1) est libre ; chaque processeur étant respectivement couplé à un dispositif de commande ; les dispositifs de commande étant reliés en série, dans l'ordre de priorité des processeurs y associés, et transmettant le signal E jusqu'au dispositif de commande le plus prioritaire parmi ceux ayant demandé à accéder à la mémoire commune (1), ce dernier dispositif de commande bloquant la transmission du signal E et autorisant le processeur qui lui est couplé, à accéder à la mémoire commune (1), chaque dispositif de commande comportant des moyens asynchrones pour bloquer la transmission du signal E, les moyens asynchrones d'un dispositif de commande étant déclenchés par le signal E lorsqu'il parvient jusqu'à ce dispositif de commande si le processeur associé à ce dispositif de commande a demandé à accéder à la mémoire commune (1), les moyens asynchrones pour bloquer la transmission du signal E comportant :

une bascule (33) commandée par l'arrivée du signal E, et validée par un signal de demande d'accès généré par le processeur associé, pour mémoriser une autorisation d'accès ;

des moyens d'acheminement de ce signal E avec un temps de transit plus long qe celui de la bascule (33), caractérisé en ce que chaque dispositif de commande possède une sortie reliée à une première borne d'entrée (3) des moyens de commande (26) pour transmettre un signal DMC correspondant à une demande d'accès ; en ce que chaque dispositif de commande (n° i) a une sortie transmettant un signal Ei + 1 reliée à une entrée du dispositif de commande de rang supérieur (n° i + 1), le premier dispositif (n° 1) ayant une borne d'entrée (5) reliée à une sortie (4) des moyens de commande pour transmettre un signal E1 ; en ce que le dernier dispositif de commande de la série possède une borne de sortie (21) reliée à une deuxième borne d'entrée (2) des moyens de commande (26), pour leur retransmettre le signal En + 1 ; et en ce que la sortie des données et des adresses de chaque processeur (n° i) est reliée à un bus d'adresses et de données (29) d'accès à la mémoire commune (1) par l'intermédiaire d'une porte (n° i) commandée par une sortie du dispositif de commande (n° i) correspondant qui transmet un signal de commande OBi ; les moyens de commande fournissant sur leur borne de sortie (4) le signal E1 lorsque le signal DMC est appliqué sur leur première borne d'entrée (3) ou bien lorsque le signal En + 1 revient sur leur deuxième borne d'entrée (2).

2. Dispositif selon la revendication 1, caractérisé en ce que les moyens de commande (26) comportent une porte logique (47) ayant deux entrées couplées respectivement à la première borne d'entrée (3) des moyens de commande (26) et à une sortie d'un générateur d'impulsions (45) dont une entrée est couplée à la deuxième borne d'entrée (2) des moyens de commande (26), et ayant une borne de sortie (4) fournissant le signal E.

3. Dispositif selon l'une quelconque des revendications 1 ou 2, caractérisé en ce que chaque dispositif de commande comporte en outre des moyens de limitation du temps d'attente d'un processeur pour accéder à la mémoire (1), provoquant la suppression de la demande d'accès, une interruption du programme suivi par le processeur qui attend et le traitement d'un autre programme prédéterminé, quand l'attente dépasse une certaine durée.

4. Dispositif selon l'une quelconque des revendications 1 à 3, caractérisé en ce que chaque dispositif de commande comporte en outre des moyens de limitation du temps d'occupation de la mémoire commune (1) par le processeur associé.

## Claims

1. A device for managing a memory (1) which is common to a plurality of processors, comprising control means (26) creating a logic signal E, if the access to the common memory (1) is free, each processor being respectively coupled to a control device, the control device being connected in series according to the priority rank of the processors associated thereto and transmitting the signal E until it reaches the control device of highest priority out of those having requested an access to the common memory (1), this last control device inhibiting transmission of the signal E and authorizing the processor coupled thereto to occupy the common memory (1), each control device comprising asynchroneous means for inhibiting the transmission of the signal E, the asynchroneous means of a control device being enabled by the signal E, if this signal reaches this control device and if the processor associated to this control device has requested an access to the common memory (1), these asynchroneous means for inhibiting the transmission of the signal E comprising :

a bistable flip-flop (33) controlled by the arrival of the signal E and validated by an access request signal created by the associated processor for memorizing an access authorization ;

means for delivering this signal E with a transit time which is longer than that of the flip-flop (33), characterized in that each control device is provided with an output connected to a first input (3) of the control means (26) for transmitting a signal (DMC) corresponding to an access request, that each control device (n° i) is provided with an output transmitting a signal Ei + 1 and connected to an input of the control device of next higher rank (n° i + 1), the first device (n° 1) having an input (5) which is connected to an output (4) of the control means for transmitting a signal E1 ; that the last control device of the series is provided with an output (21) which is connected to a second input (2) of the control means (26) in order to retransmit thereto the signal En + 1, and that the data an address output of each processor (n° i) is connected to an address and data bus (29) for the access to the common memory (1) via a gate (n° i) controlled by an output of the corresponding control device (n° i) which transmits a control signal OBi, the control means supplying on their output (4) the signal E1, if the signal DMC is applied to their first input (3) or if the signal En + 1 is applied to their second input (2).

2. A device according to claim 1, characterized in that the control means (26) include a logic gate (47) with two inputs which are coupled respectively to the first input (3) of the control means (26) and to an output of a pulse generator (45), one input of which is coupled to the second input (2) of the control means (26), the logic gate (47) having an output (4) which supplies the signal E.

3. A device according to any one of claims 1 or 2, characterized in that each control device further includes means for limiting the waiting time of a processor for an access to the memory (1), these means causing the access request to be suppressed, the program treated by the waiting processor to be interrupted and another predetermined program to be processed, if the waiting time goes beyond a given duration.

4. A device according to any one of claims 1 to 3, characterized in that each control device further comprises means for limiting the occupation time of the common memory (1) by the associated processor.

**Patentansprüche**

1. Verwaltungsvorrichtung für einen mehreren Prozessoren gemeinsamen Speicher (1), mit Steuermitteln (26), die ein logisches Signal E erzeugen, wenn der Zugang zum gemeinsamen Speicher (1) frei ist, wobei jeder Prozessor an je eine Steuervorrichtung angeschlossen ist und die Steuervorrichtungen in Reihe gemäß dem Prioritätsrang der zugeordneten Prozessoren verbunden sind und das Signal E bis an die Steuervorrichtung mit der höchsten Priorität unter denen, die einen Zugriffswunsch auf den gemeinsamen Speicher (1) gemeldet hatten, übertragen, wobei diese letzte Steuervorrichtung die Übertragung des Signals E blockiert und dem mit ihr gekoppelten Prozessor den Zugriff zum gemeinsamen Speicher (1) gestattet, wobei jede Steuervorrichtung asynchrone Mittel zur Blockierung der Übertragung des Signals E besitzt, die vom Signal E ausgelöst werden, wenn dieses Signal bis zu dieser Steuervorrichtung gelangt ist, sofern der dieser Steuervorrichtung zugeordnete Prozessor einen Zugriffswunsch zum gemeinsamen Speicher (1) gemeldet hat, wobei die asynchronen Mittel zur Blockierung der Übertragung des Signals E

eine Kippstufe (33), die vom ankommenden Signal E gesteuert wird und von einem durch den zugeordneten Prozessor erzeugten einen Zugriffswunsch meldenden Signal aktiviert wird, um eine Zugriffsbestätigung zu speichern,

und Mittel zur Weiterleitung dieses Signals E mit einer Transitzeit aufweist, die länger als die der Kippstufe (33) ist, dadurch gekennzeichnet, daß jede Steuervorrichtung einen Ausgang besitzt, der an einen ersten Eingang (3) der Steuermittel (26) angeschlossen ist, um ein Signal DMC entsprechend einem Zugriffswunsch zu übertragen, daß jede Steuervorrichtung (n° i) einen Ausgang besitzt, der ein Signal Ei + 1 an einen Eingang der Steuervorrichtung des nächsthöheren Rangs (n° i + 1) überträgt, wobei die erste Vorrichtung (n° 1) einen Eingang (5) besitzt, der an einen Ausgang (4) der Steuermittel zur Übertragung eines Signals E1 angeschlossen ist, daß die letzte Steuervorrichtung der Reihe einen Ausgang (21) besitzt, der an einen zweiten Eingang (2) der Steuermittel (26) angeschlossen ist, um ihnen das Signal En + 1 zurückzuübertragen, und daß der Daten- und Adressausgang jedes Prozessors (n° i) an eine Adressen- und Datenschiene (29) für den Zugriff zum gemeinsamen Speichen (1) über ein Tor (n° i) angeschlossen ist, das von einem Ausgang der entsprechenden, ein Steuersignal OBi übertragenden Steuervorrichtung (n° i) gesteuert wird, wobei die Steuermittel an ihrem Ausgang (4) das Signal E1 liefern, wenn das Signal DMC an ihren ersten Eingang (3) angelegt wird oder wenn das Signal En + 1 an ihren zweiten Eingang (2) gelangt.

2. Vorrichtung nach Anspruch 1, dadurch gekennzeichnet, daß die Steuermittel (26) ein logisches Tor (47) mit zwei Eingängen aufweisen, die an einen ersten Eingang (3) der Steuermittel (26) bzw. an einen Ausgang eines Impulsgenerators (45) angeschlossen sind, von dem ein Eingang an den zweiten Eingang (2) der Steuermittel (26) angeschlossen ist, wobei das logische Tor (47) einen Ausgang (4) aufweist, der das Signal E liefert.

3. Vorrichtung nach einem beliebigen der Ansprüche 1 oder 2, dadurch gekennzeichnet, daß jede Steuervorrichtung außerdem Mittel zur Beschränkung der Wartezeit eines Prozessors auf den Zugriff zum Speicher (1) aufweist, die die Unterdrückung des Zugriffswunsches, eine Unterbrechung des im wartenden Prozessor ablaufenden Programms und die Bearbeitung eines anderen vorgegebenen Programms bewirken, wenn die Wartedauer eine gewisse Zeit übersteigt.

4. Vorrichtung nach einem beliebigen der Ansprüche 1 bis 3, dadurch gekennzeichnet, daß jede Steuervorrichtung außerdem Mittel zur Begrenzung der Belegungszeit des gemeinsamen Speichers (1) durch den zugeordneten Prozessor aufweist.

Fig. 1

Fig.2

Fig.3

Fig. 4

MCi MCj DMC Ei MRi OBi Ei+1 Ej MRj OBj Ej+1 En+1 A

Fig.5

Fig.6

Fig.7

Fig.8